# EUROPEAN PATENT SPECIFICATION

(11) **EP 2 960 037 B1**
(45) Date of publication and mention of the grant of the patent: **20.12.2017**
(21) Application number: 14174170.2
(22) Date of filing: 26.06.2014
(51) Int. Cl.: B29C 43/36, B29C 43/02, B29C 59/02

(54) **Method and system for embossing/pressing**
Verfahren und Vorrichtung zum Prägen/Pressen
Procédé et dispositif pour gaufrage/compression

(43) Date of publication of application: 30.12.2015
(73) Proprietor: TCTech Sweden AB, 374 35 Karlshamn (SE)
(72) Inventor: Jäderberg, Jan, SE-16347 Spånga (SE)
(74) Representative: Industripatent i Växjö AB

(56) References cited:
- EP-A1- 0 691 551
- GB-A- 1 402 096
- US-A1- 2002 181 224
- DATABASE WPI Week 200152 Thomson Scientific, London, GB; AN 2001-478345 XP002736172, -& JP 2001 150463 A (SUMITOMO CHEM CO LTD) 5 June 2001 (2001-06-05)

## Description

### Technical field

The present disclosure relates to an embossing/pressing system and method where a first and second tool halves are used to emboss/press a plastic blank during a production cycle in order to provide the blank with a desired shape or a desired surface pattern, wherein at least one of the tool halves has a fluid filled cavity which extends beneath at least a part of its active surface, which faces the blank.

### Background

Such a system is diclosed in WO-2013/002703-A1 where the fluid filled cavity serves to equalise the pressure applied over the active surface. Further, an amount of air may be injected into the cavity to make it bulge slightly. This may help leading out air that could otherwise be trapped between the active surface and the blank and cause e.g. optical defects. The bulging thus may help achieving an improved process yield. A problem associated with such systems is nevertheless how to improve the yield further. GB-A-1402096 also discloses a pressing system, wherein a fluid filled cavity in communication with a reservoir is being provided to achieve constant pressure.

### Summary

One object of the present disclosure is therefore how to improve the production further, such that the finished products to a greater extent fulfill desired quality requirements. This object is achieved by a system as defined in claim 1 and a method as defined in claim 5. Preferred embodiments of the invention are disclosed in the dependent claims. More specifically, in a system of the initially mentioned kind, the fluid filled cavity is then connected via a conduit to a reservoir, and a control arrangement is used which is adapted to maintain desired levels of pressure in the reservoir during the production cycle. This may be used to control the way the contact surface between a tool half and a blank expands so as to provide a small tensile stress over the surface of the blank as pressing/embossing begins. This has shown to be useful to prevent so called blotches on the blank surface, and may therefore improve the quality of the finished product.

The reservoir is in the form of a cylinder having a moveable piston dividing the cylinder into a first compartment and a second compartment, and the first compartment may be in fluid connection with the fluid filled cavity. The control arrangement may be adapted to maintain desired levels of pressure in the second compartment during the production cycle. This is an efficient way of achieving the control pressure, which may further allow a pressure difference between the two halves.

Both tool halves may have such an arrangement with a fluid filled cavity connected to a control arrangement.

A limiter may be set to allow only a maximum volume of fluid to enter the cavity, such that the pressure in the second compartment can exceed the pressure in the first compartment.

Typically, the first compartment may be filled with a liquid and the second compartment may be filled with a gas.

A substantially constant pressure may be maintained in the cavity as the tool halves are pressed together.

In a corresponding method for embossing/pressing, fluid is let out of a cavity during pressing via a conduit to a reservoir and a control arrangement maintains desired levels of pressure in the second compartment during the production cycle. This method may be varied in accordance with the system.

### Brief description of the drawings

Fig 1 shows a schematic side view of an embossing device with an inserted blank.
Fig 2 shows the embossing device of fig 1 where a active surfaces of the tool have been caused to bulge.
Fig 3 shows the embossing device of fig 2 when pressing is beginning to take place.
Fig 4 shows the embossing device of fig 3 when full pressing takes place.
Fig 5 illustrates schematically how an area where pressing takes place expands over the active surface of a tool halve when pressing commences.
Fig 6 illustrates schematically an embossing device connected to an arrangement for controlling the pressure in a fluid filled cavity of a tool half.

### Detailed description

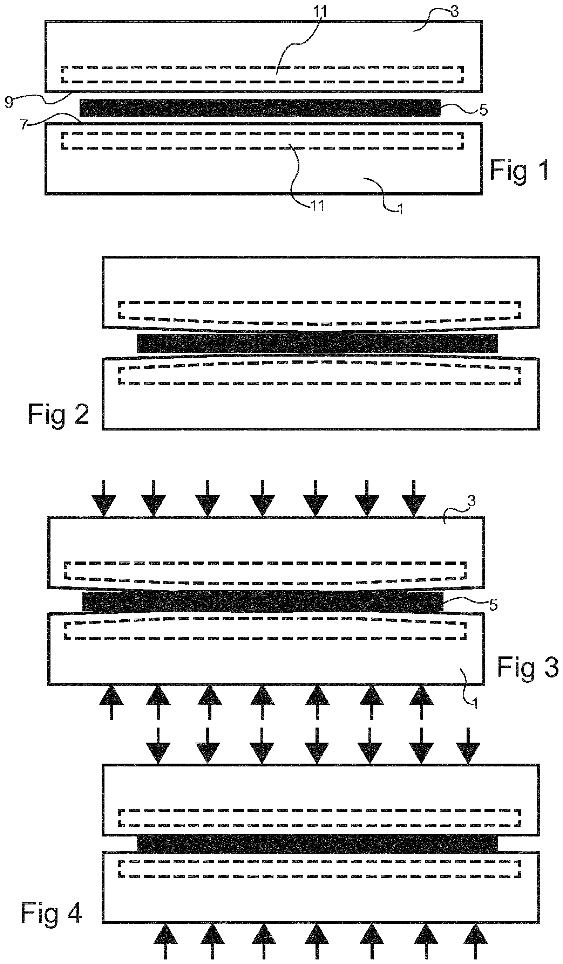

Fig 1 illustrates schematically a side view of an embossing system where a tool is in an open phase. The tool has two halves 1,3, and a blank 5 is inserted between the halves to be embossed.

During a phase of the production cycle, the blank 5 will be pressed between the halves 1,3 and optionally, the halves may be actively heated during that phase to wholly or partially melt the blank or at least to make the blank deform plastically more easily.

The embossing replicates patterns disposed on either or both active surfaces 7, 9 of the halves, i.e. the surfaces that come into contact with the blank during the pressing.

One example of a product that can be produced in this way is a lightguide plate that is used in a flat screen TV. A flat or slightly wedge-shaped rectangular and transparent blank is embossed with a fine pattern over one of its flat surfaces to form the lightguide plate. When one edge of the finished plate is lighted by means e.g. of light emitting diodes, LEDs, the plate conveys the introduced light by total reflection, but light leaks out of the plate evenly and in a predetermined fashion over one of its surfaces, thanks to the embossed pattern, to backlight e.g. an LCD display.

In order to make the production cycle quicker, the tool halves may also be actively cooled, e.g. by a fluid medium, once the pattern has been replicated.

The tool halves may generally be designed as described in WO-2013/002703-A1 where coils are used to inductively heat the active surfaces during one part of the cycle, and the tool halves are cooled by means of a fluid cooling medium during another part of the cycle. That document also describes providing a fluid filled cavity 11 in either, or as illustrated, both tool halves. The cavity 11 serves to equalize the pressure applied during pressing over the active surface and and to make sure that shear forces are not conveyed by the tool. This is done e.g. to improve optical properties of produced optical articles.

The cavity is suggested to extend beneath the greater part of the active surface, and may be e.g. about 4-5 mm thick. The above mentioned document also suggests pumping some air into the cavity to cause an overpressure that makes the active surface bulge slightly as shown in fig 2. This bulging serves mitigate the risk of pockets of air being trapped in between the blank and an active surface of the tool half. When the tool halves 1, 3 are pressed together, as illustrated in fig 3, the mid section of the blank is pressed first, and any air between the blank and either active surface is transported away towards the edges of the blank 5. It is further possible to provide a pressure sensor in contact with the fluid to provide a feedback signal indicating the applied pressure. In fig 4, full pressing takes place, which compensates for the overpressure in the cavity 11.

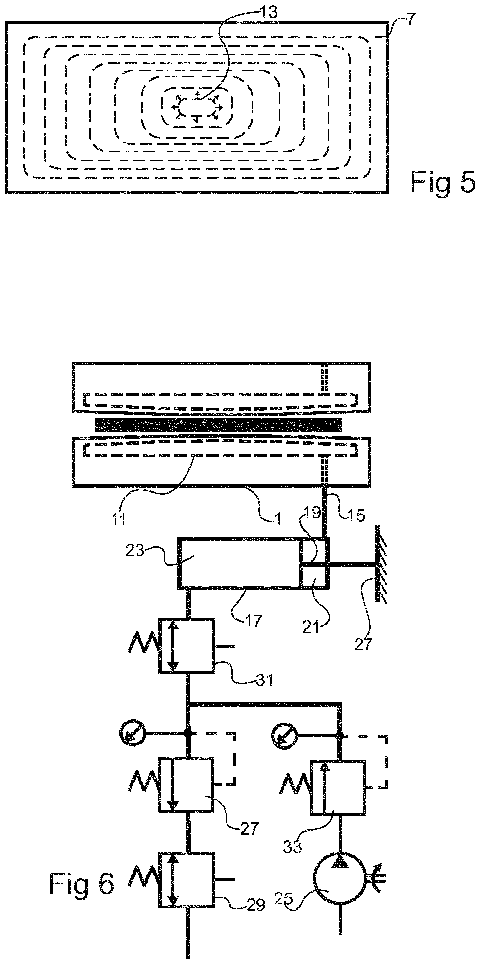

The present disclosure provides improved means for achieving the above mentioned bulging of the active surface. Fig 5 shows a front view of an active surface 7 of a tool half. Indicated dashed in the centre is an initial surface of contact 13 which is first pressed by the tool half. The surface of contact then expands gradually outwards, as indicated by the arrows and further, outer dashed lines, while the pressing proceeds, until the entire active surface presses the blank. This has shown to apply a small tensile stress in the blank that is directed perpendicularly to the indicated dashed lines. The applied tensile stress can compensate for local compression stresses, caused by imperfections in the tool or blank, that could otherwise cause blotches or spots in the finished product. By controlling how the pressing takes place with a higher degree of precision, a higher quality/yield can be achieved in the process.

Fig 6 illustrates schematically an pressing/embossing device connected to an arrangement for controlling the pressure in a fluid filled cavity of a tool half. In fig 6 only a controlling arrangement for the bottom tool half is shown, but it is understood that the upper tool half may be connected to a similar or identical arrangement.

The cavity 11 of the bottom tool half 1 is connected via a conduit 15 to a cylinder 17, which is divided by a piston 19 into a wet part 21 and a dry part 23. The conduit 15 is connected to the wet part, and the cavity 11 and the wet part are filled with a liquid fluid such as water. The dry part 23 of the cylinder 17 is connected to a compressor 25 or another device for creating an overpressure. As long as the piston 19 moves freely, the pressure in the wet and dry parts 21, 23 of the cylinder will be the same. Therefore, when an overpressure is applied in the dry part 21, the cylinder moves and pushes fluid into the cavity 11, thereby making it bulge. A limiter 27 may be used, that limits the amount of fluid that can be pushed into the cavity 11, e.g. to 0.3 litres. The limiter 27 may simply restrict the movement of the piston 19. At this point, the piston 19 is stopped, no further fluid is pushed into the cavity 11, and the pressure may rise higher in the dry side 23 than in the wet side 21 of the cylinder 17, if more compressed air is provided. The limiter 27 may be adjustable to provide for different amounts of fluid to be pushed into the cavity depending on the application. A very precise and more or less temperature independent bulging is provided in this way. Further, a much higher pressure can be obtained on the dry side, a pressure that would make the active surface bulge too much if air with that pressure had been injected into the cavity.

When subsequently pressing takes place, the pressure rises in the cavity and consequently in the wet side 21 of the cylinder 17. When the pressure in the wet side 21 of the cylinder 17 exceeds the pressure in the dry side 23, the piston 19 moves, allowing fluid to leave the cavity 11 which begins to flatten. The pressure may be kept constant during this phase by means of a pressure regulator 27 which maintains the pressure at a predetermined value, e.g. at 0.3 MPa. Thanks to this arrangement, the surface of the blank will be subjected to comparatively uniform tensile stresses as the affected area expands outwards as indicated with consecutively greater dashed boundaries in fig 5. It is possible to vary the pressure to which the regulator 27 is set during the pressing.

However, depending e.g. on the active surface and the application, it may be desired to change the pressure in the cavity 11 in accordance with other schemes. For instance, it may be desired to allow the pressure to rise initially. As illustrated in fig 6, by closing a first valve 29 downstreams of the pressure regulator 27, in the direction that fluid is pushed out of the cavity 11 during pressing, and opening a second valve 31 upstreams of the pressure regulator 27, a higher pressure than the pressure that the regulator 27 is set to is allowed in the dry part 23 of the cylinder 17. A higher pressure may thus be fed to the cylinder as determined by another pressure regulator 33. When this pressure is attained, the second valve 31 may be closed. It may then be possible to let the pressure rise even further in the cavity by applying the pressing of the tool halves. There exists a number of different options for varying the pressure throughout the production cycle.

The present disclosure is not limited to the described embodiment, and may be altered and varied in different ways withing the scope of the appended claims.

## Claims

1. Embossing/pressing system comprising a first (1) and a second (3) tool half, between which a plastic blank may be embossed/pressed during a production cycle in order to provide the blank with a desired shape or a desired surface pattern, wherein at least one of the tool halves has a fluid filled cavity (11) which extends beneath at least a part of its active surface that faces the blank, **characterized by**
- the fluid filled cavity (11) being connected via a conduit (15) to a reservoir (17); and
- a control arrangement (27) which is adapted to maintain desired levels of pressure in the reservoir during the production cycle,
- wherein the reservoir is a cylinder (17) having a moveable piston (19) dividing the cylinder into a first compartment (21) and a second compartment (23), wherein the first compartment is filled with a liquid and the second compartment is filled with a gas, and wherein the first compartment is in fluid connection with the fluid filled cavity and the control arrangement is adapted to maintain desired levels of pressure in the second compartment during the production cycle.

2. Embossing/pressing system according to claim 1 or 2, wherein both tool halves (1, 3) have a fluid filled cavity connected to a control arrangement.

3. Embossing/pressing system according to any of the preceding claims, wherein a limiter is set to allow a maximum volume of fluid to enter the cavity, such that the pressure in the second compartment can exceed the pressure in the first compartment.

4. Embossing/pressing system according to any of the preceding claims, wherein a substantially constant pressure is maintained in the cavity as the tool halves are pressed together.

5. A method for embossing/pressing wherein a plastic blank is embossed/pressed between a first (1) and a second (3) tool half, each having an active surface, during a production cycle, in order to provide the blank with a desired shape and/or a desired surface pattern, wherein at least one of the tool halves have a fluid filled cavity which extends beneath at least a part of its active surface and that active surface is caused to bulge before pressing takes place **characterized by** fluid being let out of the cavity during pressing via a conduit to a reservoir and a control arrangement maintains desired levels of pressure in reservoir during the production cycle,
- wherein the reservoir is a cylinder having a moveable piston (19) dividing the cylinder into a first compartment (21) and a second compartment (23), wherein the first compartment is filled with a liquid and the second compartment is filled with a gas, and wherein the first compartment is in fluid connection with the fluid filled cavity, and the control arrangement maintains desired levels of pressure in the second compartment during the production cycle.

## Patentansprüche

1. Vorrichtung zum Prägen/Pressen, welche eine erste (1) und eine zweite (3) Werkzeughälfte umfasst, zwischen denen ein Kunststoffrohling während eines Produktionszyklus geprägt/gepresst werden kann, um den Rohling mit einer gewünschten Form oder einem gewünschten Oberflächenmuster zu versehen, wobei wenigstens eine der Werkzeughälften einen mit Fluid gefüllten Hohlraum (11) aufweist, welcher sich unterhalb wenigstens eines Teils ihrer aktiven Fläche erstreckt, welche dem Rohling zugewandt ist, **gekennzeichnet**
- **dadurch, dass** der mit Fluid gefüllte Hohlraum (11) über eine Leitung (15) mit einem Behälter (17) verbunden ist; und
- durch eine Steuerungsanordnung (27), welche dafür ausgelegt ist, während des Produktionszyklus gewünschte Druckniveaus in dem Behälter aufrechtzuerhalten,
- wobei der Behälter ein Zylinder (17) mit einem beweglichen Kolben (19) ist, der den Zylinder in einen ersten Raum (21) und einen zweiten Raum (23) unterteilt, wobei der erste Raum mit einer Flüssigkeit gefüllt ist und der zweite Raum mit einem Gas gefüllt ist, und wobei der erste Raum in Fluidverbindung mit dem mit Fluid gefüllten Hohlraum steht und die Steuerungsanordnung dafür ausgelegt ist, während des Produktionszyklus gewünschte Druckniveaus in dem zweiten Raum aufrechtzuerhalten.

2. Vorrichtung zum Prägen/Pressen nach Anspruch 1 oder 2, wobei beide Werkzeughälften (1, 3) einen mit Fluid gefüllten Hohlraum aufweisen, der mit einer Steuerungsanordnung verbunden ist.

3. Vorrichtung zum Prägen/Pressen nach einem der vorhergehenden Ansprüche, wobei ein Begrenzer so eingestellt ist, dass er das Einströmen eines maximalen Volumens von Fluid in den Hohlraum ermöglicht, so dass der Druck in dem zweiten Raum den Druck in dem ersten Raum übersteigen kann.

4. Vorrichtung zum Prägen/Pressen nach einem der vorhergehenden Ansprüche, wobei ein im Wesentlichen konstanter Druck in dem Hohlraum aufrechterhalten wird, wenn die Werkzeughälften zusammengepresst werden.

5. Verfahren zum Prägen/Pressen, wobei ein Kunststoffrohling während eines Produktionszyklus zwischen einer ersten (1) und eine zweiten (3) Werkzeughälfte, die jeweils eine aktive Fläche aufweisen, geprägt/gepresst wird, um den Rohling mit einer gewünschten Form und/oder einem gewünschten Oberflächenmuster zu versehen, wobei wenigstens eine der Werkzeughälften einen mit Fluid gefüllten Hohlraum aufweist, welcher sich unterhalb wenigstens eines Teils ihrer aktiven Fläche erstreckt, und bewirkt wird, dass sich diese aktive Fläche wölbt, bevor ein Pressen stattfindet, **dadurch gekennzeichnet, dass** während des Pressens Fluid aus dem Hohlraum über eine Leitung in einen Behälter abgelassen wird und eine Steuerungsanordnung während des Produktionszyklus gewünschte Druckniveaus in dem Behälter aufrechterhält,
- wobei der Behälter ein Zylinder mit einem beweglichen Kolben (19) ist, der den Zylinder in einen ersten Raum (21) und einen zweiten Raum (23) unterteilt, wobei der erste Raum mit einer Flüssigkeit gefüllt ist und der zweite Raum mit einem Gas gefüllt ist, und wobei der erste Raum in Fluidverbindung mit dem mit Fluid gefüllten Hohlraum steht und die Steuerungsanordnung während des Produktionszyklus gewünschte Druckniveaus in dem zweiten Raum aufrechterhält.

## Revendications

1. Système de gaufrage/de pressage, comprenant des première (1) et seconde (3) moitiés d'outil, entre lesquelles une ébauche de plastique peut être gaufrée/pressée durant un cycle de production afin de fournir, à l'ébauche, une forme souhaitée ou un motif de surface souhaité, dans lequel au moins l'une des moitiés d'outil possède une cavité remplie de fluide (11) qui s'étend en dessous d'au moins une partie de sa surface active qui fait face à l'ébauche, **caractérisé par**
- la cavité remplie de fluide (11) étant raccordée par l'intermédiaire d'un conduit (15) à un réservoir (17) ; et
- un agencement de commande (27) qui est adapté pour maintenir des niveaux souhaités de pression dans le réservoir durant le cycle de production,
- dans lequel le réservoir est un cylindre (17) possédant un piston mobile (19) divisant le cylindre en un premier compartiment (21) et un second compartiment (23), dans lequel le premier compartiment est rempli avec un liquide et le second compartiment est rempli avec un gaz, et dans lequel le premier compartiment est en raccord fluidique avec la cavité remplie de fluide et l'agencement de commande est adapté pour maintenir des niveaux souhaités de pression dans le second compartiment durant le cycle de production.

2. Système de gaufrage/de pressage selon la revendication 1 ou 2, dans lequel les deux moitiés d'outil (1, 3) possèdent une cavité remplie de fluide connectée à un agencement de commande.

3. Système de gaufrage/de pressage selon l'une quelconque des revendications précédentes, dans lequel un limiteur est réglé pour permettre à un volume maximum de fluide d'entrer dans la cavité, de telle sorte que la pression dans le second compartiment puisse dépasser la pression dans le premier compartiment.

4. Système de gaufrage/de pressage selon l'une quelconque des revendications précédentes, dans lequel une pression sensiblement constante est maintenue dans la cavité lorsque les moitiés d'outil sont pressées ensemble.

5. Procédé pour gaufrer/presser, dans lequel une ébauche de plastique est gaufrée/pressée entre des première (1) et seconde (3) moitiés d'outil, chacune possédant une surface active, durant un cycle de production, afin de fournir, à l'ébauche, une forme souhaitée et/ou un motif de surface souhaité, dans lequel au moins l'une des moitiés d'outil possède une cavité remplie de fluide qui s'étend en dessous d'au moins une partie de sa surface active et le gonflement de cette surface active est entraîné avant que le pressage ait lieu, **caractérisé par** le fluide étant laissé sortir de la cavité durant le pressage par l'intermédiaire d'un conduit vers un réservoir et un agencement de commande maintient des niveaux souhaités de pression dans le réservoir durant le cycle de production,
- dans lequel le réservoir est un cylindre possédant un piston mobile (19) divisant le cylindre en un premier compartiment (21) et un second compartiment (23), dans lequel le premier compartiment est rempli avec un liquide et le second compartiment est rempli avec un gaz, et dans lequel le premier compartiment est en raccord fluidique avec la cavité remplie de fluide, et l'agencement de commande maintient des niveaux souhaités de pression dans le second compartiment durant le cycle de production.
